# DEMANDE DE BREVET EUROPEEN

(11) **EP 0 681 935 A1**
(43) Date de publication de la demande: **15.11.1995**
(21) Numéro de dépôt: 94107432.0
(22) Date de dépôt: 13.05.1994
(51) Int. Cl.: B60J 1/20

(54) **Cadre pour fenêtres de véhicules de loisirs**

(71) Demandeur: PARA-PRESS S.A., L-3201 Bettembourg (LU)
(72) Inventeur: Resibois, Raymond, B-6750 Sineulx (BE)
(74) Mandataire: Meyers, Ernest

(57) **Abrégé**

Le cadre (16) est destiné au logement et support, sur le côté intérieur d'une fenêtre d'un véhicule de loisir, d'un store et/ou moustiquaire . Il s'agit d'un cadre modulaire constitué de profilés rectilignes (18, 20) et de pièces d'angle (22) qui sont réunis par emboîtements mutuels. Le cadre (16) est mis en place par emboîtement de son bord arrière (40) derrière des languettes flexibles (38).

## Description

La présente invention concerne un cadre pour fenêtres de véhicules de loisirs destiné à être appliqué sur le côté intérieur de la fenêtre pour servir de logement et de support à un store et/ou une moustiquaire et constitué de profilés rectilignes horizontaux et verticaux réunis par des pièces d'angle.

Les fenêtres des habitations mobiles, par exemple des caravanes ou camping-cars, sont généralement équipées, du côté intérieur, d'un store et d'une moustiquaire à enrouleur automatique. A cet effet, on prévoit un cadre dont les parties supérieures et inférieures servent de logements et de supports aux enrouleurs du store, respectivement de la moustiquaire, tandis que les parties latérales font office de guides des côtés latéraux du store et de la moustiquaire. Ce cadre ne sert pas seulement de logement et de support du store et de la moustiquaire, mais sert également de cache pour le cadre profilé de la fenêtre.

Les cadres utilisés à cet effet sont, soit en une pièce, soit du type modulaire. Les cadres en une pièce, qui sont généralement en plastique moulé ou injecté, ont l'inconvénient qu'ils doivent être fabriqués sur mesure. Les cadres modulaires, qui sont constitués de profilés rectilignes et de pièces angulaires, n'ont pas cet inconvénient étant donné que les profilés rectilignes peuvent être coupés sur mesure en fonction des dimensions de la fenêtre. En revanche, ces cadres ont l'inconvénient que les différentes pièces doivent être vissées les unes aux autres pour former le cadre qui doit ensuite être vissé sur la paroi autour de la fenêtre.

Le but de la présente invention est de prévoir un nouveau cadre pour fenêtres de véhicules de loisirs qui présente les avantages de chacun des deux types connus, sans souffrir de leurs inconvénients, autrement dit, un cadre qui est extrêmement facilement à mettre en place et qui offre une grande flexibilité dans le choix des dimensions.

Pour atteindre cet objectif, l'invention propose un cadre pour fenêtres de véhicules de loisirs du genre décrit dans le préambule qui est caractérisé en ce que les profilés rectilignes sont emboîtés par glissement dans les pièces d'angle et y sont retenus par encliquetage d'un ergot flexible dans une encoche correspondante , en ce que deux profilés rectilignes opposés sont, chacun, télescopiques par rapport à l'une des pièces d'angle dans lesquelles ils sont emboîtés et en ce que les profilés rectilignes opposés non télescopiques sont, en vue de la mise en place et de la fixation du cadre, engageables derrière des languettes flexibles fixées sur le bord de la fenêtre.

Ce cadre présente, par conséquent, tous les avantages d'un cadre modulaire, dans la mesure où les profilés rectilignes peuvent être coupés sur mesure en fonction des dimensions de le fenêtre. En revanche, aucune vis n'est requise, ni pour l'assemblage du cadre, ni pour sa fixation sur la fenêtre.

Les profilés rectilignes non télescopiques forment les logements, l'un pour un enrouleur de moustiquaire, l'autre pour un enrouleur de store. Ces profilés sont, de préférence, les profilés horizontaux supérieurs et inférieurs.

Les profilés télescopiques sont pourvus, à l'une de leurs extrémités, d'une rainure allongée conçue pour recevoir un ergot d'une languette flexible de la pièce d'angle adjacente.

Les profilés rectilignes sont, de préférence, en aluminium, tandis que les pièces d'angle sont, de préférence, en plastique injecté.

D'autres particularités et caractéristiques ressortiront d'un mode de réalisation avantageux présenté ci-dessous, à titre d'illustration, en référence aux dessins annexés dans lesquels :
- la Figure 1 est une vue de face d'un coin supérieur droit d'un cadre selon la présente invention ;
- la Figure 2 est une vue en coupe suivant le plan II-II de la Figure 1 et
- la Figure 3 est une vue en coupe suivant le plan III-III de la Figure 1.

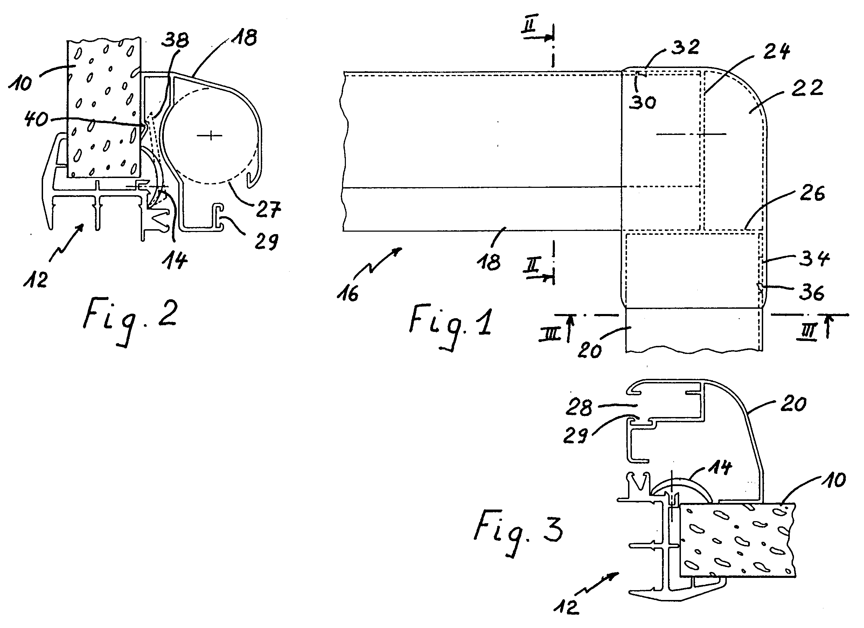

Les Figures 2 et 3 montrent une paroi 10 d'une caravane autour d'une baie de fenêtre. Sur la Figure 2, le côté extérieur est à gauche, tandis que le côté intérieur est à droite. La fenêtre non représentée, dans l'exemple à double vitrage, est montée dans un profilé 12, par exemple en aluminium, qui est maintenu en place par plusieurs clames 14 vissées, du côté intérieur, dans le profilé 12 et prenant appui sur la paroi 10 et sur le profilé 12. Un cadre 16 formant le logement d'un store et/ou d'une moustiquaire et conçu comme un cache pour masquer le côté intérieur du profilé 12 est appliqué sur le bord intérieur de la fenêtre.

Conformément à la présente invention, le cadre 16 est du type modulaire et constitué de profilés horizontaux 18, de profilés verticaux 20 et de pièces d'angle 22. Les quatre pièces d'angle 22 qui sont identiques entre elles ont un profil enveloppant pouvant recevoir, par pénétration, les profilés rectilignes horizontaux et verticaux 18, 20 et comportent des entretoises transversales 24 et 26 formant butée pour les profilés rectilignes.

Le profilé supérieur forme, comme représenté sur la Figure 2, le logement d'un enrouleur 27, par exemple de moustiquaire. Il s'agit d'un enrouleur connu en soi dont les extrémités de l'axe sont supportées dans les entretoises 24 des pièces d'angle , avec un ressort axial pour assurer un enroulement automatique. Le profilé horizontal inférieur non représenté, mais identique à celui à celui de la Figure 2, peut contenir, de la même manière, un enrouleur de store.

Les profilés verticaux 20 peuvent, pour des raisons de commodité, être identiques aux profilés horizontaux 18, sans contenir d'enrouleur, mais, selon un mode de réalisation avantageux illustré par la Figure 3, ils comportent une gorge 28 s'étendant sur toute la hauteur et faisant office de guide aux bords latéraux de la moustiquaire et du store.

Les profilés horizontaux 18 et verticaux 20 sont, de préférence, en aluminium, ce qui, a prix pratiquement égal, offre une plus grande rigidité que le plastique. Les pièces d'angle, quant à elles, sont, de préférence, en plastique injecté.

Les profilés horizontaux 18 et verticaux 20 peuvent en outre, comporter, de façon connue en soi, une rainure 29 pour la fixation d'une brosse de raclage non représentée qui est en contact frottant avec le store et/ou la moustiquaire pour le nettoyage et empêcher la pénétration d'insectes.

L'assemblage des différents éléments pour former le cadre 16 est réalisé par emboîtement mutuel des profilés et pièces d'angle . La paroi supérieure de la pièce d'angle 22 est conçue sous forme de languette flexible avec un ergot 32 qui s'emboîte dans une encoche correspondante 30 du profilé horizontal 18 lorsque celui-ci est engagé à fond dans la pièce d'angle 22, comme présenté sur la Figure 1. Les trois autres pièces d'angle, non montrées, sont engagées de la même manière sur les extrémités des profilés supérieurs et inférieurs.

L'autre côté de la pièce d'angle 22 est engagé de façon analogue sur l'extrémité supérieure du profilé vertical 20. Toutefois, contrairement au profilé horizontal 18, le profilé vertical 20 ne comporte pas une ouverture mais une rainure allongée 34 destinée à recevoir, par pénétration, un ergot 36 de la pièce d'angle 22. Cette disposition permet une liberté de mouvement télescopique entre les profilés 20 et pièces 22 après leur emboîtement mutuel. En revanche, l'extrémité inférieure de chaque profilé vertical peut être emboîtée dans la pièce d'angle inférieure par une encoche et un crochet comme en 30 et 32.

Après constitution du cadre par emboîtement des différents profilés, la hauteur est variable sur la longueur des rainures 34 des profilés verticaux. Cette mesure permet la mise en place du cadre 16 sans avoir recours à des vis de fixation ou d'autres moyens de fixation nécessitant un outillage spécial. En effet, sur les côtés supérieurs et inférieurs du profilé 12 de la fenêtre sont fixées une série de languettes flexibles 38 qui présentent, chacune, un bord saillant extérieur pouvant coopérer avec un bord rentrant longitudinal 40 de chacun des profilés horizontaux 18 comme représenté sur la Figure 2.

Pour la mise en place du cadre 16, il suffit, dès lors, d'engager celui-ci, par poussée, derrière les languettes 38, la flexibilité de celles-ci permettant au bord rentrant 40 de s'encastrer derrière les languettes 38. La nature télescopique du cadre au niveau des rainures 34 permet à celui-ci d'être appliqué sur le côté opposé contre la paroi 10 et d'être emboîté derrière les languettes 38 par glissement mutuel des pièces d'angle 22 sur les profilés verticaux 20.

La flexibilité des languettes 38 et la nature télescopique du cadre au niveau des rainures 34 permettent également un démontage du cadre en écartant les profilés horizontaux l'un de l'autre pour dégager leurs bords 40 de l'emprise des languettes 38. Il est également possible de démonter le cadre par déboîtement des profilés rectilignes et pièces d'angle en dégageant les ergots 32 et 36, par poussée, de leurs encoches ou rainures. Ceci permet à l'utilisateur un démontage complet du cadre, sans outillage spécial, à des fins de nettoyage ou d'entretien.

Le centrage latéral et vertical du cadre 16 est assuré par les clames 14 de fixation du profilé 12 de la fenêtre.

Dans le mode de réalisation décrit ci-dessus, le store et la moustiquaire sont logés dans les profilés horizontaux et verticaux. Il est toutefois également possible que le store et la moustiquaire soient logés dans les profilés verticaux. Dans ce cas, les languettes de fixation 38 doivent également être prévues sur les deux côtés verticaux et la nature télescopique du cadre 16 doit être assurée dans le sens de la largeur, c'est-à-dire que les encoches 34 doivent être prévues dans les profilés supérieurs et inférieurs.

## Revendications

1. Cadre pour fenêtre de véhicules de loisirs destiné à être appliqué sur le côté intérieur de la fenêtre pour servir de logement et de support à un store et/ou moustiquaire et constitué de profilés rectilignes horizontaux (18) et verticaux (20) réunis par des pièces d'angle (22), caractérisé en ce que les profilés rectilignes (18, 20) sont emboîtés, par glissement, dans les pièces d'angle (22) et y sont retenus par encliquetage d'un ergot flexible (32, 36) dans une encoche correspondante, en ce que deux profilés rectilignes opposés sont, chacun, télescopiques par rapport à l'une des pièces d'angle (22) dans lesquelles ils sont emboîtés et en ce que les profilés rectilignes opposés non télescopiques sont, en vue de la mise en place et de la fixation du cadre (16), engageables derrière des languettes flexibles (38) fixées sur le bord de la fenêtre.

2. Cadre selon la revendication 1, caractérisé en ce que les profilés rectilignes non télescopiques forment des logements, l'un pour un enrouleur de moustiquaire, l'autre pour un enrouleur de store.

3. Cadre selon la revendication 2, caractérisé en ce que lesdits profilés (18) sont les profilés horizontaux supérieurs et inférieurs.

4. Cadre selon l'une quelconque des revendications 1 à 3, caractérisé en ce que les profilés télescopiques (20) sont pourvus, à l'une de leurs extrémités, d'une rainure allongée (34) conçue pour recevoir un ergot (36) d'une languette flexible de la pièce d'angle adjacente (22).

5. Cadre selon l'une quelconque des revendications 1 à 5, caractérisé en ce que les profilés rectilignes (18, 20) sont en aluminium et les pièces d'angle (22) en plastique injecté.
